# EUROPEAN PATENT APPLICATION

(11) **EP 2 111 746 A1**
(43) Date of publication of application: **28.10.2009**
(21) Application number: 08251482.9
(22) Date of filing: 22.04.2008
(51) Int. Cl.: A01G 31/00

(54) **Method of growing plants**

(71) Applicant: Rockwool International A/S, 2640 Hedehusene (DK)
(72) Inventor: The designation of the inventor has not yet been filed
(74) Representative: Samuels, Lucy Alice

(57) **Abstract**

The invention provides a method of growing a flower crop comprising:
positioning a plant in the form of a cutting of the crop in a first coherent mineral wool growth substrate having a volume not more than 150 cm³,
allowing the plant to root and grow for at least 12 days,
transferring the plant within the first coherent mineral wool growth substrate so that the first coherent mineral wool growth substrate is in contact with a second coherent mineral wool growth substrate having width at least 5 cm and height at least 5 cm,
and allowing the plant to grow for at least a further 4 weeks before any harvesting of flower crop takes place.

## Description

The invention relates to methods of growing plants, in particular flower crops, using mineral wool growth substrates.

It has been well known for many years to propagate cuttings for flower crops in growth substrates formed from mineral wool. Once the cuttings have rooted and developed leaves in a first growth substrate they are usually transferred to a second growth substrate. One of the flower crops commonly propagated and grown in mineral wool growth substrates is rose.

It is conventional for the growing process to be started at a propagator's facility and then the propagator transfers the plants at an appropriate stage to a grower's facility where the growing process is completed and the flowers harvested.

The current propagation and completion of growing system which is normally used for rose cuttings is as follows:
(a) A cutting, pre-treated with root stimulator, is placed in a cut-out in a block of mineral wool growth substrate, usually of size around: width 7.5 cm x length 7.5 cm x height 6. 5 cm.
(b) The roots and the shoot are allowed to grow. After about four weeks, roots have developed throughout the block and the primary shoot, still in the block, is then sent from the propagator to the grower.
(c) The grower positions these blocks on a single slab, usually of size around 1 m (length) x 0.2 m (width) x 0.075 m (height). Usually there are around 8 blocks (and hence 8 plants) per slab.
(d) The primary shoots are then allowed to root in to the slab, which takes about 4 days.
(e) After around 2 to 3 weeks a bud is generated and is cut off (disbudding) which generates more stem and leaf volume. It is necessary to do this in order to have enough leaves on the stem.
(f) After two further weeks the entire stem is bent downwards to create apical dominance and induce formation of further shoots growing upwards.
(g) After 5 to 6 more weeks these further shoots can be harvested (although they are generally of low quality) - this is termed the "first flush" - and after six further weeks there are further shoots - the "second flush" - which can be harvested and are of higher quality. Further flushes can be generated. Normally about 5 to 6 flushes are achievable in the first year, with 6 to 7 flushes in each subsequent year. Normally the plants are kept for about 4 to 6 years.

This system means that the propagator is responsible for the cuttings for around 4 weeks and then the grower is responsible for them for a considerable period of weeks before a harvestable flower, e.g. rose, is generated. In practice this means that a grower often does not make any profit from flower crops generated during the first year of growth. The long period of time for which the grower is responsible for the plants before a harvestable crop is generated also means that it is more difficult for the grower to time a crop to match specific times of year when flower crops are particularly required (for instance Mothers' Day and other feast days).

It would be desirable to provide a growing method which allows ultimately better root and shoot development and hence a better quality of flower and which can also lead to a harvestable flower crop in a shorter period of time.

Particular problems arise when a growth substrate is to be used for propagation. For optimum propagation of the cuttings being grown, propagators would ideally like to supply water frequently to the substrate. Unfortunately, this has a problem that the growth substrate then becomes too wet and this has a negative effect on the growth of the plants, especially because in periods of low light intensity it can result in a high risk of disease.

Accordingly, it wouid be desirable to provide a propagation and growing method which alleviates these disadvantages.

According to the invention, we provide a method of growing a flower crop comprising:
positioning a plant in the form of a cutting of the crop in a first coherent mineral wool growth substrate having a volume not more than 150 cm³,
allowing the plant to root and grow for at least 12 days,
transferring the plant within the first coherent mineral wool growth substrate so that the first coherent mineral wool growth substrate is in contact with a second coherent mineral wool growth substrate having width at least 5 cm and height at least 5 cm,
and allowing the plant to grow for at least a further 4 weeks before any harvesting of flower crop takes place.

We find that use of this system means that much greater root and shoot development can be obtained at the stage when the propagator is responsible for the plants (taking a longer time) and when the plant is given to the grower, far less work is required by the grower and there is less time to wait before the plant is ready for harvest. Furthermore, this is not just a question of changing the responsibility for the same steps. Instead, the overall period from cutting to final harvest is shorter and the overall number of action steps that must be taken is reduced.

This is beneficial in that the grower can then make a profit in the first year and hence also has the opportunity to change to a different crop at an earlier stage. It is also easier to control the point at which the flowers are harvestable and time this with feast days.

The invention is concerned with growth of flower crops, that is, flowering plants that are grown for their flowers. It is the flowers that are harvested and ultimately sold. The flower crop can be a perennial plant. It can be a woody plant. Preferably it is rose. Other flower crops to which the invention is applicable include Bouvardia, cut Hydrangea, Gerbera, Orchid and Anthurium.

The plant is incorporated into the first mineral wool growth substrate as a cutting.

The first coherent mineral wool growth substrate can be formed of glass wool or slag wool but is usually stone wool. In general it can be any of the types of man-made vitreous fibre which are conventionally known for production of growth substrates. Fibre diameter is often in the range 3 to 20 microns, in particular 5 to 10 microns, as conventional.

The growth substrate is in the form of a coherent mass. That is, the growth substrate is generally a coherent matrix of mineral wool fibres, which has been produced as such, but can also be formed by granulating a slab of mineral wool and consolidating the granulated material.

The mineral wool growth substrate usually comprises a binder, often an organic binder, which is generally heat-curable. The growth substrate is preferably a coherent matrix of mineral fibres connected by cured binder. The binder can be an organic hydrophobic binder, and in particular it can be a conventional heat-curable (thermosetting), hydrophobic binder of the type which has been used for many years in mineral wool growth substrates (and other mineral wool based products). This has the advantage of convenience and economy. Thus, the binder is preferably a phenol formaldehyde resin or urea formaldehyde resin, in particular phenol urea formaldehyde (PUF) resin. It can be a formaldehyde free binder such as a polyacrylic acid based binder or an epoxy based binder.

The binder is generally present in the first coherent mineral wool growth substrate in amounts of from 0.1 to 10% based on the substrate, usually 0.5 to 5%, most preferably 1.5 to 5%.

The mineral wool growth substrate preferably also comprises a wetting agent. This can be a conventional wetting agent such as a non-ionic surfactant. Alternatively it can be an ionic surfactant, preferably an anionic surfactant. For instance it can be any of the ionic surfactants described in our publication W02008/009467.

The wetting agent is present in the first mineral wool growth substrate in amounts preferably from 0.01 to 3% (by weight), based on growth substrate, more preferably 0.05 to 1%, in particular, 0.075 to 0.5%.

Preferably the amount (by weight) of wetting agent based on the weight of binder (dry matter) is in the range 0.01 to 5%, preferably 0.5 to 4%.

The first mineral wool growth substrate may contain other types of conventional additives in addition to binder and wetting agent, for instance salts such as ammonium sulphate and adhesion promoters such as silanes.

Density of the first mineral wool growth substrate can be up to 200 kg/m³ but is generally in the range 10 to 150 kg/m³, often in the range 30 to 100 kg/m³, preferably in the range 35 to 90 kg/m³. It can be at least 45kg/m3.

Preferably the fibres are arranged predominantly in the vertical direction. This has the advantage of allowing better root growth than other orientations and enables the provision of a robust substrate which is useful during transplantation to the next stage.

The first mineral wool growth substrate is significantly smaller than the standard first growth substrate for flower crops. It has a volume up to 150 cm³. Preferably it is not more than 100 cm³, and more preferably is not more than 80 cm³, most preferably not more than 70 cm^{3.}

Preferably the height is not more than 7 cm, in particular not more than 6 cm. Preferably the width (herein, the minimum cross-dimension at the top surface of the substrate when oriented as for use) is not more than 6 cm and in particular not more than 5 or not more than 4 cm and the length (herein, cross-dimension perpendicular to the width direction) is not more than 6 cm and in particular not more than 5 or not more than 4 cm.

The use of a small volume first mineral wool growth substrate has a number of advantages. This means that it is possible to water the substrate more often without saturating it. As a result, the increased evaporation has the effect that more oxygen can penetrate into the substrate, enabling the roots to develop better and faster.

The choice of a relatively small first mineral wool growth substrate, which is believed to be smaller even than those already known for propagation of cuttings, appears to enable a particular watering and treatment pattern which allows better root development at the first stage. It also has the advantage that it is easier to fit these substrates into the second mineral wool growth substrate rather than placing them on top of it.

The first mineral wool growth substrate may be cylindrical or cubic or cuboid in shape but is preferably frustoconical, with the wider end at the top surface in use.

In the method, plants are positioned in the mineral wool growth substrate for growth. More than one cutting may be positioned in a single unit of first mineral wool growth substrate but preferably each unit has only one cutting.

Usually the first mineral wool growth substrate will have a cut-out for the (or each) cutting to be positioned in it. This may be substantially cylindrical or substantially conical or a combination of a top section which is frustoconical and a lower section which is substantially cylindrical.

Prior to positioning the cuttings in the first mineral wool growth substrate the substrate is preferably watered, for instance by soaking for about 12 hours or more, after which the cuttings are added.

The cuttings are grown in the first mineral wool growth substrate for at least 12 days, preferably at least 18 days and can be grown in this substrate for at least 3, 4 or 5 weeks. They can be grown in this substrate for up to 2 months or as much as 10 weeks.

In this first stage the cuttings can be subjected to a cooling storage method during which they are stored at a temperature of from 2 to 5 °C, preferably for at least four days. This storage can be for at least 2, 3 or 4 weeks and can be for at least 5 weeks, up to as much as 8 or 10 weeks. This has the effect of providing plants which are ultimately stronger and of better quality.

It is believed that the use of a small first growth substrate allows the use of frequent watering (for instance at least once every 3 days, preferably at least once every 2 days) without reducing oxygen in the plug to a disadvantageous level. If it were attempted to water a mineral wool growth substrate of the size which is standard in rose propagation as frequently as this, it is expected that this would lead to undesirably low oxygen levels.

The cuttings are irrigated with water and nutrients. The use of ionic surfactant has the advantage that loss of the wetting agent to the irrigation water is minimal, allowing for a system in which there is essentially no anti foam material in the irrigation water.

Non-conventional irrigation methods can be used, specifically irrigation can be from the base of the substrate. Thus, tidal irrigation can be used. A growth substrate can be placed for irrigation in a container passing through a gutter. Alternatively, conventional irrigation methods can be used in the invention, such as top irrigation.

As a result of using a small first mineral wool growth substrate, which enables a beneficial watering pattern, the root growth within the first substrate is higher and better than root growth in the standard system using a larger first growth substrate. As a result of this, the leaf volume on the primary shoot is high enough already that it is not necessary to carry out the disbudding step in order to generate secondary growth. In practice the propagator can disbud anyway to prevent flowering and use of nutrients for the flower, but it is nevertheless still unnecessary to wait for development of the secondary growth. This means step (e) can be eliminated altogether and step (f) can be carried out at a much earlier stage and the first roses are ready for harvesting at an earlier point and are often of higher quality.

WO03/003815 discloses a special cutting method which improves cutting development and ultimate flower formation. This involves the use of a specialised growth hormone solution and particular timings of treatment and subjecting the cuttings to defined temperatures. This system is useful in combination with the system of the invention.

In the invention the cuttings are grown in the first mineral wool growth substrate and then transferred to the second mineral wool growth substrate. This is normally done after the cuttings have rooted. It can be preferred, especially when the crop is rose, that the cuttings are transferred before they have developed leaves.

Prior to positioning the first mineral wool growth substrate in the second mineral wool growth substrate, the second substrate is preferably watered, for instance by soaking for about 12 hours or more, after which the first mineral wool growth substrates are added.

This second mineral wool growth substrate is larger than the first mineral wool growth substrate and has the following dimensions: width (defined as above) at least 5 cm and height at least 5 cm. Preferably it has width in the range 7.5 to 30 cm. Preferably the length (defined as above) is in the range 7.5 to 60 cm. Preferably the height is in the range 6.5 to 16 cm.

In its other characteristics than its dimensions the second mineral wool growth substrate can, independently, have the preferred characteristics discussed above for the first mineral wool growth substrate.

The transfer is effected by positioning the first mineral wool growth substrate, containing the plant, in contact with the second mineral wool growth substrate. This can be done simply by positioning the first mineral wool growth substrate on the top surface of the second mineral wool growth substrate. However, in a preferred method each first mineral wool growth substrate is placed within a cut-out in a second mineral wool growth substrate. This has the advantage of providing a system which is physically stable and easy to transport and also allows more rapid root development within the second mineral wool growth substrate. Positioning the first mineral wool growth substrate inside a cut-out in the second mineral wool growth substrate is also believed to have an advantage generated by causing some minor damage to the exposed roots, which leads to their more rapid regeneration during rooting-in.

It is desirable for the first mineral wool growth substrate to fit closely into the cut-out in the second mineral wool growth substrate. The adjacent surfaces are preferably in contact over a high proportion of their area. This maximises the advantages mentioned above. Preferably the side and bottom surfaces of the cut-out in the second mineral wool growth substrate are generally contiguous with at least 50%, preferably at least 90%, of the area of the surfaces of the first mineral wool growth substrate other than the top surface.

Each unit of second mineral wool growth substrate can contain one or more units of first mineral wool growth substrate, and preferably contains two units of first mineral wool growth substrate, each of these units of first mineral wool growth substrate containing one plant.

Preferably the combination of one unit of second mineral wool growth substrate and however many first mineral wool growth substrates are in contact with it are wrapped in polymeric film, usually surrounding the sides, bottom surface and top surface and allowing the plant or plants to protrude from the top. This is helpful for transport from one facility to another.

The plants are then allowed to grow in this situation for at least 4 weeks, preferably at least 5 or 6 weeks, in particular at least 7 weeks or at least 8 weeks. After this a flower crop can be cut. Generally this happens at the grower's facility, after transfer from the propagator's facility.

The method of the invention allows a much larger proportion of the growing process to be carried out in one facility, namely that of the propagator. For instance, growth in the second mineral wool substrate at the propagator's facility can be carried out for at least 2, 3, or 4 weeks, in particular at least 6 or at least 8 weeks. This means that when the plants are transferred to the grower there is a much shorter time than is conventional until a harvestable flower crop is available.

The mineral wool growth substrates can be made in conventional manner. That is, they can be made by providing solid mineral raw materials, melting these raw materials to form a melt and forming the melt into fibres, collecting the fibres as a primary web and consolidating the collected fibres. A binder is, conventionally, usually added by spraying on to the fibres after formation but before collection and consolidation. In the invention the binder is usually a curable binder and is normally cured as the consolidated product passes through a curing oven. After this the product is cut into the desired sizes.

Curing is normally in an oven at a temperature of around 200°C or greater, often at least 220°C, for instance in the range of 220 to 275 or up to 290°C. Examples of curing temperatures are 225, 240 and 250°C.

Binder is usually applied to the fibres by spraying of a solution of the binder components in finely divided/atomised form.

Wetting agent is also generally applied to the fibres as an atomised/finely divided spray, usually as a solution or dispersion, but can be in neat form if the wetting agent is itself a liquid.

Wetting agent and binder may be applied to the fibres simultaneously or separately. If they are applied simultaneously, this may be as a result of spraying onto the fibres a single liquid composition which comprises both binder components and wetting agent. Such a composition may, for instance, be produced before transport of the composition to the fibre production facility. Alternatively, the materials may be blended at the fibre production facility. As a further alternative they may be blended in-line just before spraying takes place.

Alternatively, wetting agent and binder components may be applied separately but simultaneously to the fibres.

In general, application is usually by a spray into the spinning chamber into a cloud of the just-formed fibres. This results in distribution of the wetting agent on the surfaces of the fibres.

## Claims

1. A method of growing a flower crop comprising:
positioning a plant in the form of a cutting of the crop in a first coherent mineral wool growth substrate having a volume not more than 150 cm³,
allowing the plant to root and grow for at least 12 days,
transferring the plant within the first coherent mineral wool growth substrate so that the first coherent mineral wool growth substrate is in contact with a second coherent mineral wool growth substrate having width at least 5 cm and height at least 5 cm,
and allowing the plant to grow for at least a further 4 weeks before any harvesting of flower crop takes place.

2. A method according to claim 1 comprising watering the plant whilst it is positioned in the first coherent mineral wool growth substrate at least once every three days, preferably at least once every two days.

3. A method according to claim 1 or claim 2 in which the flower crop is a perennial.

4. A method according to claim 1 or claim 2 in which the flower crop is a woody plant.

5. A method according to any preceding claim in which the flower crop is rose.

6. A method according to any preceding claim in which the contact between the first coherent mineral wool growth substrate and the second coherent mineral wool growth substrate is achieved by providing a cut-out in the second coherent mineral wool growth substrate into which a single first coherent mineral wool growth substrate is placed.

7. A method according to any preceding claim in which growth in the first coherent mineral wool growth substrate is carried out for at least 18 days, preferably at least 5 weeks, before transfer to the second coherent mineral wool growth substrate.

8. A method according to any preceding claim in which two first coherent mineral wool growth substrates are contacted with a single second coherent mineral wool growth substrate.

9. A method according to any preceding claim in which the volume of the first coherent mineral wool growth substrate is not more than 80 cm³, preferably not more than 70 cm³.

10. A method according to any preceding claim in which the second coherent mineral wool substrate has width in the range 7.5 to 30 cm, length in the range 7.5 to 60 cm and height in the range 6.5 to 16 cm.

11. A method according to any preceding claim in which the plant is stored at a temperature in the range 2 to 5 °C for at least four days whilst positioned in the first coherent mineral wool growth substrate and before transfer to the second coherent mineral wool growth substrate.

12. A method according to claim 11 in which the period of storage at 2 to 5 degrees C is up to 10 weeks.
